# EUROPEAN PATENT SPECIFICATION

(11) **EP 3 291 455 B1**
(45) Date of publication and mention of the grant of the patent: **06.11.2019**
(21) Application number: 15884354.0
(22) Date of filing: 14.08.2015
(51) Int. Cl.: H04B 7/04, H04B 17/12

(54) **METHOD AND SYSTEM FOR CALIBRATING DOWNLINK AND UPLINK CHANNELS OF SMART ANTENNA, AND STORAGE MEDIUM**
VERFAHREN UND SYSTEM ZUR KALIBRIERUNG VON DOWNLINK- UND UPLINK-KANÄLEN EINER INTELLIGENTEN ANTENNE UND SPEICHERMEDIUM
PROCÉDÉ ET SYSTÈME POUR ÉTALONNER DES CANAUX DE LIAISON DESCENDANTE ET DE LIAISON MONTANTE D'UNE ANTENNE INTELLIGENTE ET SUPPORT DE STOCKAGE

(30) Priority: 11.03.2015 CN 201510106339
(43) Date of publication of application: 07.03.2018
(73) Proprietor: ZTE Corporation, Shenzhen, Guangdong 518057 (CN)
(72) Inventor: LIN, Jiajun, Shenzhen Guangdong 518057 (CN); WANG, Hongzhan, Shenzhen Guangdong 518057 (CN); HE, Xiaolong, Shenzhen Guangdong 518057 (CN)
(74) Representative: Regimbeau
(86) International application number: PCT/CN2015/086953
(87) International publication number: WO 2016/141674

(56) References cited:
- WO-A1-2010/111864
- CN-A- 102 014 094
- CN-A- 102 014 094
- CN-A- 102 195 695
- CN-A- 103 166 881
- US-A1- 2005 239 506

## Description

### TECHNICAL FIELD

The present invention relates to the technical field of mobile communication, and particularly relates to methods and systems for calibrating downlink and uplink channels of smart antennas, and storage media.

### BACKGROUND

There are two errors in each channel of a smart antenna array: a non-time-varying error and a time-varying error, wherein the non-time-varying error can be accurately measured by off-line correction and compensated in a baseband. The time-varying error is mainly caused by inconsistency of each channel, e.g., an amplitude, a phase and other factors of each channel are changed at any time, so online calibration and compensation need to be taken on amplitude and phase errors of each channel.

At present, single antenna transmission and single antenna reception are mainly adopted as antenna correction ways in a TDD system. Interference elimination is performed on control channels or data channels in a same cell baseband board by repeated transmission and reception. A calibration method and a related device for a smart antenna transmitting channel and a receiving channel is disclosed in the application CN102014094A. In addition, the application US2005239506A1 discloses a real-time calibration method for a smart antenna array, and the application CN103166881A discloses a smart antenna calibration method and a smart antenna calibration system.

An existing antenna calibration way may produce a certain impact on TDD services and is low in efficiency. When the number of antennas to be calibrated is large, it takes a long time to complete calibration of uplink and downlink channels of the antennas.

### SUMMARY

In order to solve technical problems in an existing art, embodiments of the present invention provide methods and systems for calibrating downlink and uplink channels of smart antennas, and storage media.

Embodiments of the present invention provide a method for calibrating downlink channels of smart antennas, including:
allocating a downlink time-domain calibration sequence for each corresponding to-be-calibrated downlink channel according to a downlink calibration instruction;
simultaneously acquiring a plurality of downlink time-domain calibration sequences corresponding to to-be-calibrated downlink channels in a period of each subsequent downlink GAP, and transmitting each of the acquired downlink time-domain calibration sequences to the corresponding downlink channel until all the allocated downlink time-domain calibration sequences are transmitted;
collecting the downlink time-domain calibration sequence passing through each downlink channel in real time for each downlink GAP, performing coupling processing on the collected downlink time-domain calibration sequences to generate downlink comprehensive time-domain calibration sequences, transmitting the downlink comprehensive time-domain calibration sequences to downlink calibration channels, converting the downlink comprehensive time-domain calibration sequences passing through the downlink calibration channels into downlink comprehensive frequency-domain calibration sequences, and caching the downlink comprehensive frequency-domain calibration sequences; and
calculating compensation values of the to-be-calibrated downlink channels according to all the cached downlink comprehensive frequency-domain calibration sequences, and performing online calibration on each of the to-be-calibrated downlink channels according to the compensation values.

In one embodiment, after allocating the corresponding downlink time-domain calibration sequence for each to-be-calibrated downlink channel according to the downlink calibration instruction, the method further includes:
dividing the to-be-calibrated downlink channels into multiple groups according to a preset strategy, wherein each group including a plurality of downlink channels, and
the plurality of downlink time-domain calibration sequences acquired in a period of each subsequent downlink GAP are downlink time-domain calibration sequences corresponding to one group of downlink channels in the multiple groups of downlink channels.

In one embodiment, a step of dividing the to-be-calibrated downlink channels into multiple groups according to the preset strategy wherein each group includes a plurality of downlink channels, includes:
dividing N to-be-calibrated downlink channels into N/M groups according to the preset strategy, wherein each group includes M downlink channels.

In one embodiment, a step of dividing the to-be-calibrated downlink channels into multiple groups according to the preset strategy wherein each group includes a plurality of downlink channels, includes:
dividing the N to-be-calibrated downlink channels into N/M+1 groups according to the preset strategy, wherein each group includes M downlink channels and a downlink reference channel.

In one embodiment, in the method for calibrating downlink channels of smart antennas, each of the downlink time-domain calibration sequences transmitted in a same downlink GAP carries a downlink channel identifier different from other downlink time-domain calibration sequences transmitted in the same downlink GAP.

In addition, embodiments of the present invention further provide a storage medium storing a set of instructions that, when executed by at least one processor, cause the processor to perform operations described above.

In addition, embodiments of the present invention further provide a system for calibrating downlink channels of smart antennas. The system includes:
a downlink calibration sequence allocating module, configured to allocate a downlink time-domain calibration sequence for each corresponding to-be-calibrated downlink channel according to a downlink calibration instruction;
a downlink calibration sequence transmitting module, configured to simultaneously acquire a plurality of downlink time-domain calibration sequences corresponding to to-be-calibrated downlink channels in a period of each subsequent downlink GAP, and transmit each of the acquired downlink time-domain calibration sequences to the corresponding downlink channel until all the allocated downlink time-domain calibration sequences are transmitted;
a downlink calibration sequence processing module, configured to collect the downlink time-domain calibration sequence passing through each downlink channel in real time for each downlink GAP, perform coupling processing on the collected downlink time-domain calibration sequences to generate downlink comprehensive time-domain calibration sequences, transmit the downlink comprehensive time-domain calibration sequences to downlink calibration channels, convert the downlink comprehensive time-domain calibration sequences passing through the downlink calibration channels into downlink comprehensive frequency-domain calibration sequences, and cache the downlink comprehensive frequency-domain calibration sequences; and
a downlink channel calibrating module, configured to calculate compensation values of the to-be-calibrated downlink channels according to all the cached downlink comprehensive frequency-domain calibration sequences, and perform online calibration on each of the to-be-calibrated downlink channels according to the compensation values.

In one embodiment, the system for calibrating downlink channels of smart antennas further includes:
a downlink channel grouping module, configured to divide the to-be-calibrated downlink channels into multiple groups according to a preset strategy, wherein each group comprises a plurality of downlink channels, and
the plurality of downlink time-domain calibration sequences acquired in a period of each subsequent downlink GAP are downlink time-domain calibration sequences corresponding to one group of downlink channels in the multiple groups of downlink channels.

In one embodiment, the downlink channel grouping module is specifically configured to divide N to-be-calibrated downlink channels into N/M groups according to the preset strategy, wherein each group includes M downlink channels.

In one embodiment, the downlink channel grouping module is further specifically configured to divide the N to-be-calibrated downlink channels into N/M+1 groups according to the preset strategy, wherein each group includes M downlink channels and a downlink reference channel.

In one embodiment, in the system for calibrating downlink channels of smart antennas, each of the downlink time-domain calibration sequences transmitted in a same downlink GAP carries a downlink channel identifier different from other downlink time-domain calibration sequences transmitted in the same downlink GAP.

In addition, in order to achieve the above purposes, embodiments of the present invention further provide a method for calibrating uplink channels of smart antennas. The method includes:
transmitting uplink time-domain calibration sequences to uplink calibration channels in a period of a subsequent GAP according to uplink calibration instructions;
acquiring the uplink time-domain calibration sequences passing through the uplink calibration channels in the period of the GAP, performing one-to-multiple coupling processing on the uplink time-domain calibration sequences according to the number K of the to-be-calibrated uplink channels to generate K uplink time-domain calibration sequences, and transmitting one uplink time-domain calibration sequence to the K to-be-calibrated uplink channels respectively;
converting the uplink time-domain calibration sequence passing through each of the uplink channels into a corresponding uplink frequency-domain calibration sequence; and
calculating compensation values of the corresponding uplink channels according to the uplink frequency-domain calibration sequence of each of the uplink channels, and performing online calibration on each of the uplink channels according to the compensation values.

In addition, embodiments of the present invention further provide a storage medium storing a set of instructions that, when executed by at least one processor, cause the processor to perform the method for calibrating uplink channels of smart antennas.

In addition, embodiments of the present invention further provide a system for calibrating uplink channels of smart antennas. The system includes:
an uplink calibration sequence transmitting module, configured to transmit uplink time-domain calibration sequences to uplink calibration channels in a period of a subsequent GAP according to uplink calibration instructions;
an uplink calibration sequence processing module, configured to acquire the uplink time-domain calibration sequences passing through the uplink calibration channels in the period of the GAP, perform one-to-multiple coupling processing on the uplink time-domain calibration sequences according to the number K of the to-be-calibrated uplink channels to generate K uplink time-domain calibration sequences, and transmit one uplink time-domain calibration sequence to the K to-be-calibrated uplink channels respectively;
an uplink calibration sequence converting module, configured to convert the uplink time-domain calibration sequence passing through each of the uplink channels into a corresponding uplink frequency-domain calibration sequence; and
an uplink channel calibrating module, configured to calculate compensation values of the corresponding uplink channels according to the uplink frequency-domain calibration sequence of each of the uplink channels, and perform online calibration on each of the uplink channels according to the compensation values.

The method and the system for calibrating downlink channels of smart antennas, and the storage medium provided by embodiments of the present invention greatly shorten a time for calibrating the downlink channels of the smart antennas and increase efficiency of calibrating the downlink channels of the smart antennas, compared with single-time single-antenna downlink channel calibration, without affecting normal operations of the downlink channels, in a way of allocating the corresponding downlink time-domain calibration sequence for each to-be-calibrated downlink channel according to the downlink calibration instruction, simultaneously acquiring the downlink time-domain calibration sequences corresponding to the plurality of to-be-calibrated downlink channels in a period of each subsequent downlink GAP, transmitting each of the acquired downlink time-domain calibration sequences to the corresponding downlink channel until all the allocated downlink time-domain calibration sequences are transmitted, collecting the downlink time-domain calibration sequence passing through each downlink channel in real time for each downlink GAP, performing coupling processing on the collected downlink time-domain calibration sequences to generate downlink comprehensive time-domain calibration sequences, transmitting the downlink comprehensive time-domain calibration sequences to downlink calibration channels, converting the downlink comprehensive time-domain calibration sequences passing through the downlink calibration channels into downlink comprehensive frequency-domain calibration sequences, caching the downlink comprehensive frequency-domain calibration sequences, calculating compensation values of the to-be-calibrated downlink channels according to all the cached downlink comprehensive frequency-domain calibration sequences, and performing online calibration on each of the to-be-calibrated downlink channels according to the compensation values.

In addition, the method and the system for calibrating uplink channels of smart antennas, and the storage medium provided by embodiments of the present invention greatly shorten a time for calibrating the uplink channels of the smart antennas and increase efficiency of calibrating the uplink channels of the smart antennas, compared with single-time single-antenna uplink channel calibration, without affecting normal operations of the uplink channels, in a way of transmitting the uplink time-domain calibration sequences to the uplink calibration channels in the period of a subsequent GAP according to uplink calibration instructions, acquiring the uplink time-domain calibration sequences passing through the uplink calibration channels in the period of the GAP, performing one-to-multiple coupling processing on the uplink time-domain calibration sequences according to the number K of the to-be-calibrated uplink channels to generate K uplink time-domain calibration sequences, transmitting one uplink time-domain calibration sequence to the K to-be-calibrated uplink channels respectively, converting the uplink time-domain calibration sequence passing through each of the uplink channels into a corresponding uplink frequency-domain calibration sequence, calculating compensation values of the corresponding uplink channels according to the uplink frequency-domain calibration sequence of each of the uplink channels, and performing online calibration on each of the uplink channels according to the compensation values.

### BRIEF DESCRIPTION OF DRAWINGS

In drawings (which are not necessarily drawn to scale), similar reference numerals can be used to describe similar components in different views. The similar reference numerals with different alphabetic suffixes can represent different examples of the similar components. The drawings generally show various embodiments discussed herein by a way of example rather than limitation.
Fig. 1 is a flow chart illustrating an embodiment of a method for calibrating downlink channels of smart antennas of the present invention;
Fig. 2 is a schematic diagram illustrating a functional module of an embodiment of a system for calibrating downlink channels of smart antennas of the present invention;
Fig. 3 is a schematic diagram illustrating a functional module of another embodiment of a system for calibrating downlink channels of smart antennas of the present invention;
Fig. 4 is a flow chart illustrating an embodiment of a method for calibrating uplink channels of smart antennas of the present invention; and
Fig. 5 is a schematic diagram illustrating a functional module of an embodiment of a system for calibrating uplink channels of smart antennas of the present invention.

Realization of purposes, functional features and advantages of the present invention are further described in combination with embodiments and with reference to the drawings.

### DETAILED DESCRIPTION

It should be understood that specific embodiments described herein are only used for explaining the present invention, rather than limiting the present invention.

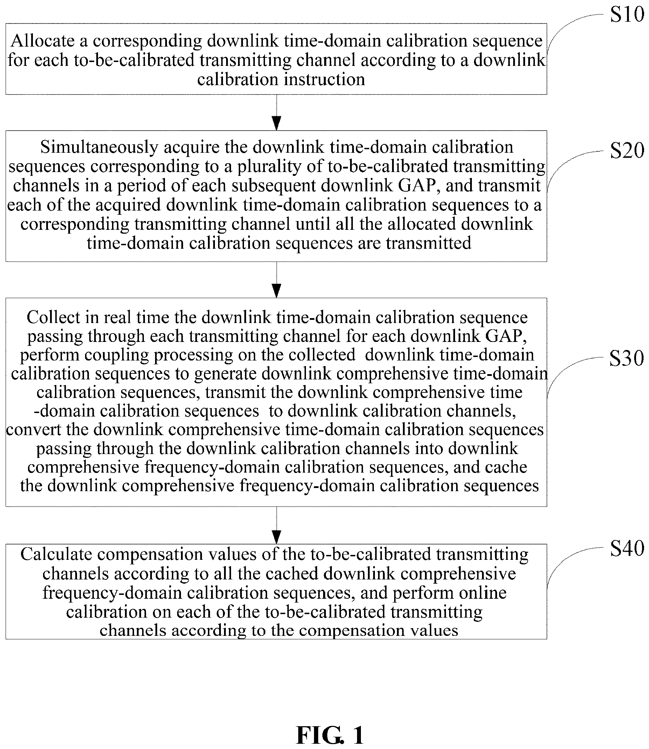

Embodiments of the present invention provide a method for calibrating downlink channels of smart antennas. With reference to Fig. 1, Fig. 1 is a flow chart illustrating an embodiment of the method for calibrating downlink channels of smart antennas of the present invention. The method in the present embodiment includes:
Step S10, a corresponding downlink time-domain calibration sequence is allocated for each to-be-calibrated downlink channel according to a downlink calibration instruction.
   In the present embodiment, when a downlink calibration instruction inputted by a user is received, the number of the to-be-calibrated downlink channels may be calculated firstly, and then, the corresponding number of downlink time-domain calibration sequences are allocated according to the number of the to-be-calibrated downlink channels.
Step S20, the downlink time-domain calibration sequences corresponding to a plurality of to-be-calibrated downlink channels are simultaneously acquired in a period of each subsequent downlink GAP; and each of the acquired downlink time-domain calibration sequences is transmitted to the corresponding downlink channel until all the allocated downlink time-domain calibration sequences are transmitted.
   In the present embodiment, each of the downlink time-domain calibration sequences transmitted in the same downlink GAP carries a downlink channel identifier different from the other downlink time-domain calibration sequences transmitted in the downlink GAP so that which downlink channel corresponds to the downlink time-domain calibration sequence can be known according to the downlink channel identifier. In the present embodiment, different phases can be allocated to the downlink time-domain calibration sequences transmitted in the same downlink GAP. The phase is used as the downlink channel identifier different from other downlink time-domain calibration sequences transmitted in the same downlink GAP, e.g., a difference between the phases of the adjacent downlink time-domain calibration sequences transmitted in the same downlink GAP is 2π/M.
   In the present embodiment, in order to shorten a time for calibrating all the to-be-calibrated downlink channels and not to affect normal operation of TDD services of the to-be-calibrated downlink channels, the corresponding downlink time-domain calibration sequences are transmitted to the downlink channels in a period of the subsequent downlink GAP, and the corresponding downlink time-domain calibration sequences are transmitted to the plurality of to-be-calibrated downlink channels in one downlink GAP. When the number of to-be-calibrated downlink channels is too large, it is not appropriate to transmit the corresponding downlink time-domain calibration sequences to all the to-be-calibrated downlink channels in the same downlink GAP. The to-be-calibrated downlink channels need to be grouped. Downlink calibration sequences corresponding to all the to-be-calibrated downlink channels are transmitted by a plurality of downlink GAPs. The downlink calibration sequences corresponding to a group of downlink channels are transmitted in each of the downlink GAPs. Namely, when the number of to-be-calibrated downlink channels is too large, the to-be-calibrated downlink channels are divided into a plurality of groups according to a preset strategy after step S10, wherein each group includes a plurality of downlink channels, and the number of downlink channels in each group may be the same or different. After the to-be-calibrated downlink channels are grouped, the downlink time-domain calibration sequences corresponding to one group of downlink channels are selected from the downlink time-domain calibration sequences corresponding to the multiple groups of downlink channels in the period of each subsequent downlink GAP, and then are transmitted to the corresponding downlink channels until all the downlink time-domain calibration sequences are transmitted, i.e., the plurality of downlink time-domain calibration sequences acquired in the period of each subsequent downlink GAP are the downlink time-domain calibration sequences corresponding to one group of downlink groups in the multiple groups of downlink channels. For example, if a plurality of to-be-calibrated downlink channels exist, and the corresponding downlink time-domain calibration sequences cannot be transmitted to all the to-be-calibrated downlink channels in one downlink GAP at the same time, the plurality of downlink channels can be divided into X groups according to the preset strategy, and each group includes the plurality of downlink channels. Then, after receiving the downlink calibration instructions, the corresponding downlink time-domain calibration sequences are transmitted in X downlink GAPs, e.g., after receiving the downlink calibration instructions, the corresponding downlink calibration sequences are transmitted to a first group of to-be-calibrated downlink channels in a first downlink GAP, the corresponding downlink calibration sequences are transmitted to a second group of to-be-calibrated downlink channels in a second downlink GAP, ... and the corresponding downlink calibration sequences are transmitted to an X^{th} group of to-be-calibrated downlink channels in an X^{th} downlink GAP.
Step S30, the downlink time-domain calibration sequence passing through each downlink channel is collected in real time for each downlink GAP; coupling processing is performed on the collected downlink time-domain calibration sequences to generate downlink comprehensive time-domain calibration sequences; the downlink comprehensive time-domain calibration sequences are transmitted to downlink calibration channels; the downlink comprehensive time-domain calibration sequences passing through the downlink calibration channels are converted into downlink comprehensive frequency-domain calibration sequences; and the downlink comprehensive frequency-domain calibration sequences are cached.
   In the step S30, the downlink comprehensive time-domain calibration sequences include information of each collected time-domain calibration sequence. The downlink comprehensive frequency-domain calibration sequences include information of a frequency-domain calibration sequence corresponding to each of the collected time-domain calibration sequences. In the step, the downlink comprehensive time-domain calibration sequences are transmitted to the downlink calibration channels so that the downlink calibration channels perform related processing on the downlink comprehensive frequency-domain calibration sequences, wherein the downlink calibration channels process the downlink comprehensive frequency-domain calibration sequences in an existing way which is not repeated herein.
Step S40, compensation values of the to-be-calibrated downlink channels are calculated according to all the cached downlink comprehensive frequency-domain calibration sequences; and online calibration is performed on each of the to-be-calibrated downlink channels according to the compensation values.

In the present embodiment, after all the downlink time-domain calibration sequences are transmitted to the corresponding downlink channels and all the downlink comprehensive frequency-domain calibration sequences are cached, the compensation values of the to-be-calibrated downlink channels are calculated according to all the cached downlink comprehensive frequency-domain calibration sequences, i.e., the downlink frequency-domain calibration sequences are extracted from each of the downlink comprehensive frequency-domain calibration sequences, and then the compensation value of the corresponding downlink channel is calculated according to each of the downlink frequency-domain calibration sequences. For example, if J downlink channels need to be calibrated, two downlink comprehensive frequency-domain calibration sequences are cached, wherein a first downlink comprehensive frequency-domain calibration sequence includes the downlink frequency-domain calibration sequences corresponding to a first to an I^{th} downlink channels, and a second downlink comprehensive frequency-domain calibration sequence includes the downlink frequency-domain calibration sequences corresponding to (I+1)^{th} to J^{th} downlink channels; then, the downlink frequency-domain calibration sequences corresponding to first to I^{th} downlink channels are extracted from the first downlink comprehensive frequency-domain calibration sequence, the downlink frequency-domain calibration sequences corresponding to (I+1)^{th} to J^{th} downlink channels are extracted from the second downlink comprehensive frequency-domain calibration sequence, and then the compensation values of the corresponding downlink channels (first to J^{th} downlink channels) are calculated according to each of the extracted downlink frequency-domain calibration sequences.

In the present embodiment, the to-be-calibrated downlink channels can be divided into a plurality of groups according to the preset strategy preferably in two ways, wherein the first one is that the N to-be-calibrated downlink channels are divided into N/M groups according to the preset strategy and each group includes M downlink channels. The time for completing online calibration of the N downlink channels in this way just needs N/M^{∗}HTDD frames, wherein an HTDD frame represents a TDD frame time; and the calibration time is shortened by M times relative to single-time single-antenna downlink channel online calibration. Since the compensation value of each downlink channel is calculated by using an amplitude and a phase of a downlink reference channel as a basis of reference, and a time-varying characteristic of the downlink reference channel may introduce an error. When the time-varying characteristic of the downlink reference channel is not severe, the error is relatively small, and this way can be adopted. The second one is that the N to-be-calibrated downlink channels are divided into N/M+1 groups according to the preset strategy, each group includes M downlink channels, and each group includes one downlink reference channel. The time for completing the online calibration of the N downlink channels in this way just needs (N/M+1)^{∗}HTDD frames, wherein the HTDD frame represents a TDD frame time. One more TDD frame time is used relative to the first way, but the calibration time is greatly shortened in comparison with the single-time single-antenna downlink channel online calibration. However, since each group includes the downlink reference channel, the error caused by the time-varying characteristic of the downlink reference channel can be maximally eliminated in comparison with the first way, thereby greatly improving calibration precision of the downlink channels.

The method for calibrating downlink channels of smart antennas provided by the above embodiment greatly shortens the time for calibrating the downlink channels of the smart antennas and increases efficiency of calibrating the downlink channels of the smart antennas, compared with single-time single-antenna downlink channel calibration, without affecting normal operations of the downlink channels, in a way of allocating the corresponding downlink time-domain calibration sequence for each to-be-calibrated downlink channel according to the downlink calibration instruction, simultaneously acquiring the downlink time-domain calibration sequences corresponding to the plurality of to-be-calibrated downlink channels in a period of each subsequent downlink GAP, transmitting each of the acquired downlink time-domain calibration sequences to the corresponding downlink channel until all the allocated downlink time-domain calibration sequences are transmitted, collecting the downlink time-domain calibration sequence passing through each downlink channel in real time for each downlink GAP, performing coupling processing on the collected downlink time-domain calibration sequences to generate downlink comprehensive time-domain calibration sequences, transmitting the downlink comprehensive time-domain calibration sequences to downlink calibration channels, converting the downlink comprehensive time-domain calibration sequences passing through the downlink calibration channels into downlink comprehensive frequency-domain calibration sequences, caching the downlink comprehensive frequency-domain calibration sequences, calculating compensation values of the to-be-calibrated downlink channels according to all the cached downlink comprehensive frequency-domain calibration sequences, and performing online calibration on each of the to-be-calibrated downlink channels according to the compensation values.

In addition, embodiments of the present invention further provide a storage medium including a set of instructions; and at least one processor is caused to perform operations described above when the instructions are executed.

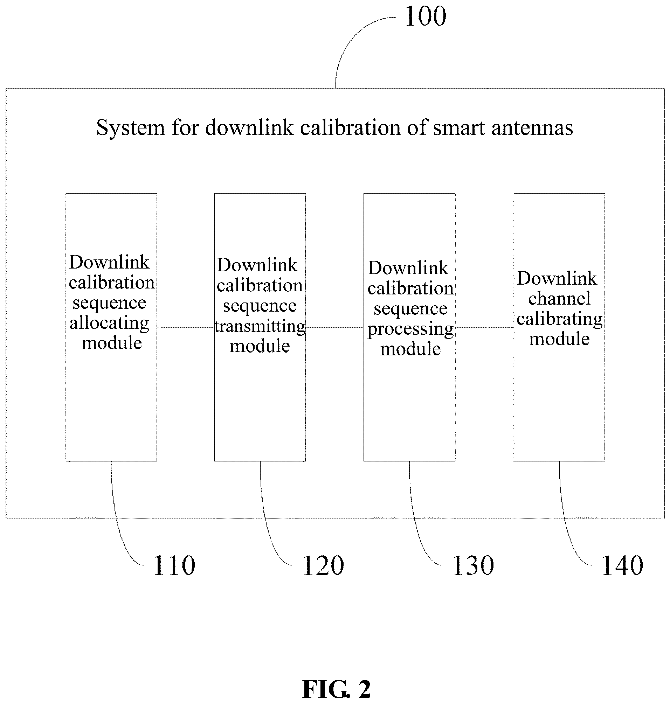

Embodiments of the present invention further provide a system for calibrating downlink channels of smart antennas. With reference to Fig. 2, Fig. 2 is a schematic diagram illustrating a functional module of an embodiment of the system for calibrating downlink channels of smart antennas of the present invention. In the present embodiment, the system 100 includes a downlink calibration sequence allocating module 110, a downlink calibration sequence transmitting module 120, a downlink calibration sequence processing module 130 and a downlink channel calibrating module 140, wherein
the downlink calibration sequence allocating module 110 is configured to allocate a corresponding downlink time-domain calibration sequence for each to-be-calibrated downlink channel according to a downlink calibration instruction;
the downlink calibration sequence transmitting module 120 is configured to simultaneously acquire the downlink time-domain calibration sequences corresponding to a plurality of to-be-calibrated downlink channels in a period of each subsequent downlink GAP, and transmit each of the acquired downlink time-domain calibration sequences to the corresponding downlink channel until all the allocated downlink time-domain calibration sequences are transmitted;
the downlink calibration sequence processing module 130 is configured to collect the downlink time-domain calibration sequence passing through each downlink channel in real time for each downlink GAP, perform coupling processing on the collected downlink time-domain calibration sequences to generate downlink comprehensive time-domain calibration sequences, transmit the downlink comprehensive time-domain calibration sequences to downlink calibration channels, convert the downlink comprehensive time-domain calibration sequences passing through the downlink calibration channels into downlink comprehensive frequency-domain calibration sequences, and cache the downlink comprehensive frequency-domain calibration sequences; and
the downlink channel calibrating module 140 is configured to calculate compensation values of the to-be-calibrated downlink channels according to all the cached downlink comprehensive frequency-domain calibration sequences, and perform online calibration on each of the to-be-calibrated downlink channels according to the compensation values.

In the present embodiment, when a downlink calibration instruction inputted by a user is received, the downlink calibration sequence allocating module 110 may calculate the number of the to-be-calibrated downlink channels firstly, and then allocate the corresponding number of downlink time-domain calibration sequences according to the number of the to-be-calibrated downlink channels.

In the present embodiment, each of the downlink time-domain calibration sequences transmitted in the same downlink GAP carries a downlink channel identifier different from the other downlink time-domain calibration sequences transmitted in the downlink GAP so that which downlink channel corresponds to the downlink time-domain calibration sequence can be known according to the downlink channel identifier. In the present embodiment, different phases can be allocated to the downlink time-domain calibration sequences transmitted in the same downlink GAP. The phase is used as the downlink channel identifier different from other downlink time-domain calibration sequences transmitted in the same downlink GAP, e.g., a difference between the phases of the adjacent downlink time-domain calibration sequences transmitted in the same downlink GAP is 2π/M.

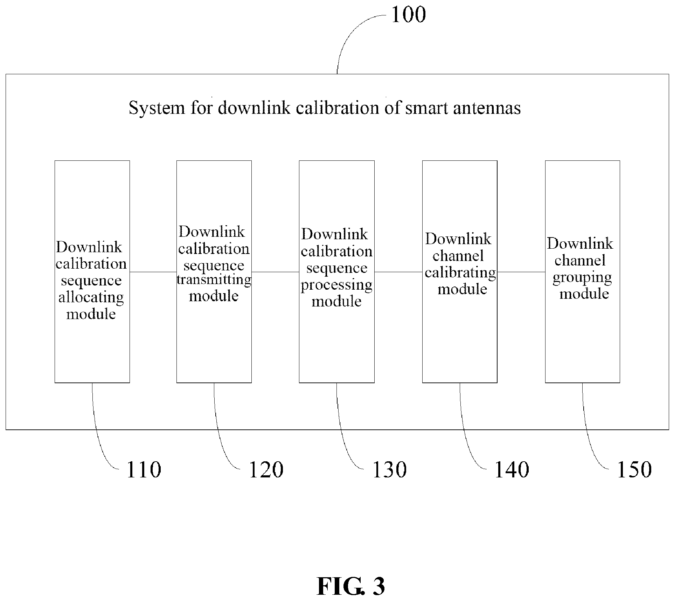

In the present embodiment, in order to shorten a time for calibrating all the to-be-calibrated downlink channels and not to affect normal operation of TDD services of the to-be-calibrated downlink channels, the corresponding downlink time-domain calibration sequences are transmitted to the downlink channels in a period of the subsequent downlink GAP, and the corresponding downlink time-domain calibration sequences are transmitted to the plurality of to-be-calibrated downlink channels in one downlink GAP by the downlink calibration sequence transmitting module 120. When the number of to-be-calibrated downlink channels is too large, it is not appropriate to transmit the corresponding downlink time-domain calibration sequences to all the to-be-calibrated downlink channels in the same downlink GAP. The to-be-calibrated downlink channels need to be grouped. Downlink calibration sequences corresponding to all the to-be-calibrated downlink channels are transmitted by a plurality of downlink GAPs. The downlink calibration sequences corresponding to a group of downlink channels are transmitted in each of the downlink GAPs. Namely, when the number of to-be-calibrated downlink channels is too large, the to-be-calibrated downlink channels further need to be divided into a plurality of groups according to a preset strategy. With reference to Fig. 3, Fig. 3 is a schematic diagram illustrating the functional module of another embodiment of the system for calibrating downlink channels of smart antennas of the present invention. The system 100 for calibrating downlink channels of smart antennas further includes: a downlink channel grouping module 150.

The downlink channel grouping module 150 is configured to divide the to-be-calibrated downlink channels into a plurality of groups according to the preset strategy, and each group includes the plurality of downlink channels. The plurality of downlink time-domain calibration sequences acquired in a period of each subsequent downlink GAP are the downlink time-domain calibration sequences corresponding to one group of downlink channels of the multiple groups of downlink channels. Namely, after the to-be-calibrated downlink channels are grouped, the downlink time-domain calibration sequences corresponding to one group of downlink channels are selected from the downlink time-domain calibration sequences corresponding to the multiple groups of downlink channels in the period of each subsequent downlink GAP, and then are transmitted to the corresponding downlink channels until all the downlink time-domain calibration sequences are transmitted. The number of downlink channels in each group of the multiple groups of downlink channels may be the same or different.

For example, if a plurality of to-be-calibrated downlink channels exist, and the corresponding downlink time-domain calibration sequences cannot be transmitted to all the to-be-calibrated downlink channels in one downlink GAP at the same time, the plurality of downlink channels can be divided into X groups according to the preset strategy, and each group includes the plurality of downlink channels. Then, after receiving the downlink calibration instructions, the corresponding downlink time-domain calibration sequences are transmitted in X downlink GAPs, e.g., after receiving the downlink calibration instructions, the corresponding downlink calibration sequences are transmitted to a first group of to-be-calibrated downlink channels in a first downlink GAP, the corresponding downlink calibration sequences are transmitted to a second group of to-be-calibrated downlink channels in a second downlink GAP, ... and the corresponding downlink calibration sequences are transmitted to an X^{th} group of to-be-calibrated downlink channels in an X^{th} downlink GAP.

In the present embodiment, the downlink comprehensive time-domain calibration sequences include information of each collected time-domain calibration sequence. The downlink comprehensive frequency-domain calibration sequences include information of a frequency-domain calibration sequence corresponding to each of the collected time-domain calibration sequences. In the present embodiment, the downlink comprehensive time-domain calibration sequences are transmitted to the downlink calibration channels so that the downlink calibration channels perform related processing on the downlink comprehensive frequency-domain calibration sequences, wherein the downlink calibration channels process the downlink comprehensive frequency-domain calibration sequences in an existing way which is not repeated herein.

In the present embodiment, after all the downlink time-domain calibration sequences are transmitted to the corresponding downlink channels and all the downlink comprehensive frequency-domain calibration sequences are cached, the downlink channel calibrating module 140 calculates compensation values of the to-be-calibrated downlink channels according to all the cached downlink comprehensive frequency-domain calibration sequences, i.e., the downlink frequency-domain calibration sequences are extracted from each of the downlink comprehensive frequency-domain calibration sequences, and then the compensation value of the corresponding downlink channel is calculated according to each of the downlink frequency-domain calibration sequences. For example, if J downlink channels need to be calibrated, and two downlink comprehensive frequency-domain calibration sequences are cached, wherein a first downlink comprehensive frequency-domain calibration sequence includes the downlink frequency-domain calibration sequences corresponding to first to I^{th} downlink channels, and a second downlink comprehensive frequency-domain calibration sequence includes the downlink frequency-domain calibration sequences corresponding to (I+1)^{th} to J^{th} downlink channels, then the downlink frequency-domain calibration sequences corresponding to first to I^{th} downlink channels are extracted from the first downlink comprehensive frequency-domain calibration sequence, the downlink frequency-domain calibration sequences corresponding to (I+1)^{th} to J^{th} downlink channels are extracted from the second downlink comprehensive frequency-domain calibration sequence, and then the compensation values of the corresponding downlink channels (first to J^{th} downlink channels) are calculated according to each of the extracted downlink frequency-domain calibration sequences.

In the present embodiment, the downlink channel grouping module 150 divides the to-be-calibrated downlink channels into a plurality of groups according to the preset strategy preferably in two ways, wherein the first one is that the N to-be-calibrated downlink channels are divided into N/M groups according to the preset strategy and each group includes M downlink channels. The time for completing online calibration of the N downlink channels in this way just needs N/M^{∗}HTDD frames, wherein an HTDD frame represents a TDD frame time; and the calibration time is shortened by M times relative to single-time single-antenna downlink channel online calibration. Since the compensation value of each downlink channel is calculated by using an amplitude and a phase of a downlink reference channel as a basis of reference, and a time-varying characteristic of the downlink reference channel may introduce an error, when the time-varying characteristic of the downlink reference channel is not severe, the error is relatively small, and this way can be adopted. The second one is that the N to-be-calibrated downlink channels are divided into N/M+1 groups according to the preset strategy, each group includes M downlink channels, and each group includes one downlink reference channel. The time for completing the online calibration of the N downlink channels in this way just needs (N/M+1)^{∗}HTDD frames, wherein the HTDD frame represents a TDD frame time. One more TDD frame time is used relative to the first way, but the calibration time is greatly shortened in comparison with the single-time single-antenna downlink channel online calibration. However, since each group includes the downlink reference channel, the error caused by the time-varying characteristic of the downlink reference channel can be maximally eliminated in comparison with the first way, thereby greatly improving calibration precision of the downlink channels.

The system for calibrating downlink channels of smart antennas provided by the above embodiment greatly shortens a time for calibrating the downlink channels of the smart antennas and increases efficiency of calibrating the downlink channels of the smart antennas, compared with single-time single-antenna downlink channel calibration, without affecting normal operations of the downlink channels, in a way of allocating the corresponding downlink time-domain calibration sequence for each to-be-calibrated downlink channel according to the downlink calibration instruction, simultaneously acquiring the downlink time-domain calibration sequences corresponding to the plurality of to-be-calibrated downlink channels in a period of each subsequent downlink GAP, transmitting each of the acquired downlink time-domain calibration sequences to the corresponding downlink channel until all the allocated downlink time-domain calibration sequences are transmitted, collecting the downlink time-domain calibration sequence passing through each downlink channel in real time for each downlink GAP, performing coupling processing on the collected downlink time-domain calibration sequences to generate downlink comprehensive time-domain calibration sequences, transmitting the downlink comprehensive time-domain calibration sequences to downlink calibration channels, converting the downlink comprehensive time-domain calibration sequences passing through the downlink calibration channels into downlink comprehensive frequency-domain calibration sequences, caching the downlink comprehensive frequency-domain calibration sequences, calculating compensation values of the to-be-calibrated downlink channels according to all the cached downlink comprehensive frequency-domain calibration sequences, and performing online calibration on each of the to-be-calibrated downlink channels according to the compensation values.

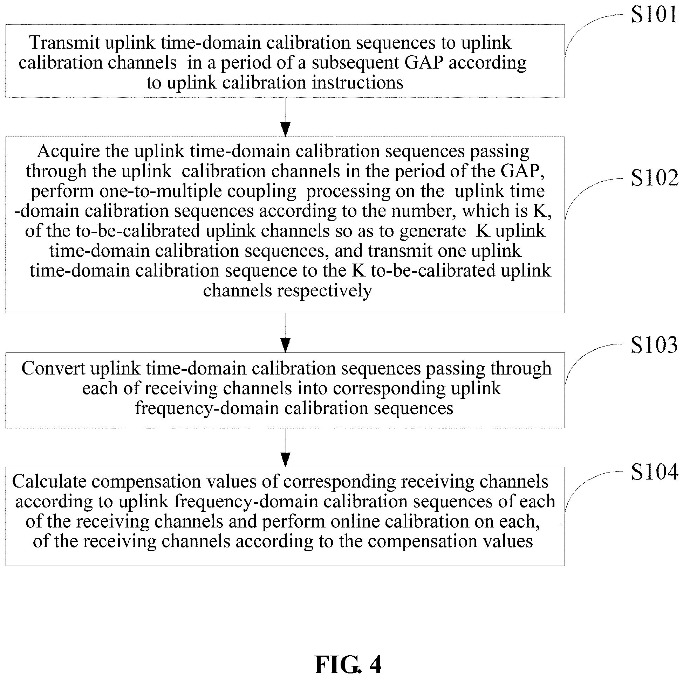

Embodiments of the present invention further provide a method for calibrating uplink channels of smart antennas. With reference to Fig. 4, Fig. 4 is a flow chart illustrating an embodiment of a method for calibrating uplink channels of smart antennas of the present invention. In the present embodiment, the method includes:
Step S101, uplink time-domain calibration sequences are transmitted to uplink calibration channels in a period of a subsequent GAP according to uplink calibration instructions.
   In the present embodiment, after receiving uplink calibration instructions inputted by the user, an uplink time-domain calibration sequence is acquired in a subsequent GAP and the uplink time-domain calibration sequence is transmitted to an uplink calibration channel so that the uplink calibration channel performs related processing on the uplink time-domain calibration sequence. In the present embodiment, the uplink calibration channel processes the uplink time-domain calibration sequence in an existing way which is not repeated herein.
Step S102, the uplink time-domain calibration sequences passing through the uplink calibration channels are acquired in the period of the GAP; one-to-multiple coupling processing is performed on the uplink time-domain calibration sequences according to the number K of the to-be-calibrated uplink channels to generate K uplink time-domain calibration sequences; and one uplink time-domain calibration sequence is transmitted to the K to-be-calibrated uplink channels respectively.
   The K uplink time-domain calibration sequences generated in the step S102 are the same and need not to be distinguished.
Step S103, the uplink time-domain calibration sequence passing through each of the uplink channels is converted into a corresponding uplink frequency-domain calibration sequence.
   In the present embodiment, since current amplitudes and phases of the uplink channels are different, the same uplink time-domain calibration sequence may change after passing through each of the uplink channels. Changes after passing through different uplink channels may be the same or different, so that the uplink time-domain calibration sequences passing through the uplink channels may be the same or different.
Step S104, compensation values of the corresponding uplink channels are calculated according to the uplink frequency-domain calibration sequence of each of the uplink channels; and online calibration is performed on each of the uplink channels according to the compensation values.

In the step S104, the amount of changes of the amplitude and the phase of each of the uplink channels can be calculated according to the uplink frequency-domain calibration sequence of each of the uplink channels, so that the compensation value of each of the uplink channels can be calculated.

The method for calibrating uplink channels of smart antennas provided by the above embodiment of the present invention greatly shortens a time for calibrating the uplink channels of the smart antennas and increases efficiency of calibrating the uplink channels of the smart antennas, compared with single-time single-antenna uplink channel calibration, without affecting normal operations of the uplink channels, in a way of transmitting the uplink time-domain calibration sequences to the uplink calibration channels in the period of a subsequent GAP according to uplink calibration instructions, acquiring the uplink time-domain calibration sequences passing through the uplink calibration channels in the period of the GAP, performing one-to-multiple coupling processing on the uplink time-domain calibration sequences according to the number K of the to-be-calibrated uplink channels to generate K uplink time-domain calibration sequences, transmitting one uplink time-domain calibration sequence to the K to-be-calibrated uplink channels respectively, converting the uplink time-domain calibration sequence passing through each of the uplink channels into a corresponding uplink frequency-domain calibration sequence, calculating compensation values of the corresponding uplink channels according to the uplink frequency-domain calibration sequence of each of the uplink channels, and performing online calibration on each of the uplink channels according to the compensation values.

In addition, embodiments of the present invention further provide a storage medium including a set of instructions; and at least one processor is caused to perform the method for calibrating uplink channels of smart antennas when the instructions are executed.

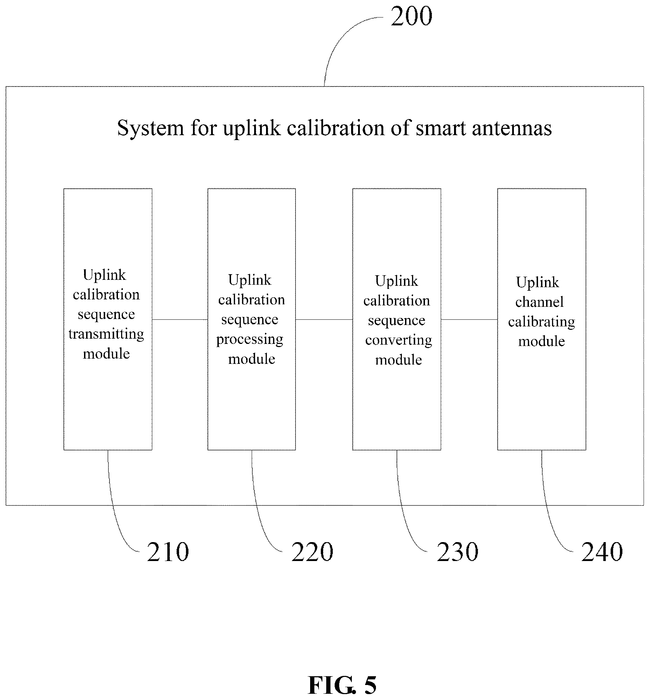

Embodiments of the present invention further provide a system for calibrating uplink channels of smart antennas. With reference to Fig. 5, Fig. 5 is a schematic diagram illustrating a functional module of an embodiment of the system for calibrating uplink channels of smart antennas of the present invention. In the present embodiment, the system 200 for calibrating uplink channels of smart antennas includes: an uplink calibration sequence transmitting module 210, an uplink calibration sequence processing module 220, an uplink calibration sequence converting module 230 and an uplink channel calibrating module 240, wherein
the uplink calibration sequence transmitting module 210 is configured to transmit uplink time-domain calibration sequences to uplink calibration channels in a period of a subsequent GAP according to uplink calibration instructions;
the uplink calibration sequence processing module 220 is configured to acquire the uplink time-domain calibration sequences passing through the uplink calibration channels in the period of the GAP, perform one-to-multiple coupling processing on the uplink time-domain calibration sequences according to the number K of the to-be-calibrated uplink channels to generate K uplink time-domain calibration sequences, and transmit one uplink time-domain calibration sequence to the K to-be-calibrated uplink channels respectively;
the uplink calibration sequence converting module 230 is configured to convert the uplink time-domain calibration sequence passing through each of the uplink channels into a corresponding uplink frequency-domain calibration sequence; and
the uplink channel calibrating module 240 is configured to calculate compensation values of the corresponding uplink channels according to the uplink frequency-domain calibration sequence of each of the uplink channels, and perform online calibration on each of the uplink channels according to the compensation values.

In the present embodiment, after receiving uplink calibration instructions inputted by the user, an uplink time-domain calibration sequence is acquired in a subsequent GAP and the uplink time-domain calibration sequence is transmitted to an uplink calibration channel so that the uplink calibration channel performs related processing on the uplink time-domain calibration sequence. In the present embodiment, the uplink calibration channel processes the uplink time-domain calibration sequence in an existing way which is not repeated herein.

The K uplink time-domain calibration sequences generated in the present embodiment are the same and need not to be distinguished. Since current amplitudes and phases of the uplink channels are different, the same uplink time-domain calibration sequence may change after passing through each of the uplink channels. Changes after passing through different uplink channels may be the same or different, so that the uplink time-domain calibration sequences passing through the uplink channels may be the same or different.

The uplink channel calibration module 240 in the present embodiment calculates the amount of changes of the amplitude and the phase of each of the uplink channels according to the uplink frequency-domain calibration sequence of each of the uplink channels, so that the compensation value of each of the uplink channels can be calculated.

The system for calibrating uplink channels of smart antennas provided by embodiments of the present invention greatly shortens a time for calibrating the uplink channels of the smart antennas and increases efficiency of calibrating the uplink channels of the smart antennas, compared with single-time single-antenna uplink channel calibration, without affecting normal operations of the uplink channels, in a way of transmitting the uplink time-domain calibration sequences to the uplink calibration channels in the period of a subsequent GAP according to uplink calibration instructions, acquiring the uplink time-domain calibration sequences passing through the uplink calibration channels in the period of the GAP, performing one-to-multiple coupling processing on the uplink time-domain calibration sequences according to the number K of the to-be-calibrated uplink channels to generate K uplink time-domain calibration sequences, transmitting one uplink time-domain calibration sequence to the K to-be-calibrated uplink channels respectively, converting the uplink time-domain calibration sequence passing through each of the uplink channels into a corresponding uplink frequency-domain calibration sequence, calculating compensation values of the corresponding uplink channels according to the uplink frequency-domain calibration sequence of each of the uplink channels, and performing online calibration on each of the uplink channels according to the compensation values.

Those skilled in the art should understand that embodiments of the present invention may be provided as methods, systems or computer program products. Thus, the present invention may adopt a form of hardware embodiments, software embodiments, or embodiments combining software aspects with hardware aspects. Moreover, the present invention may adopt a form of computer program products implemented in one or more computer available storage media (including but not limited to magnetic disk memory, optical memory, etc.) containing computer available program codes.

The present invention is described with reference to flow charts and/or block diagrams of the methods, the devices (systems) and the computer program products according to embodiments of the present invention. It should be understood that each flow and/or each block in the flow charts and/or the block diagrams, as well as a combination of the flows and/or the blocks in the flow charts and/or the block diagrams can be implemented by computer program instructions. The computer program instructions can be provided to a processor of a general-purpose computer, a special-purpose computer, an embedded processor or other programmable data processing devices to produce a machine so that an apparatus for implementing functions specified in one or more flows of the flow charts and/or one or more blocks of the block diagrams is produced by instructions executed by the processor of a computer or other programmable data processing devices.

The computer program instructions can also be stored in a computer readable memory capable of guiding the computer or other programmable data processing devices to operate in a particular way, so that the instructions stored in the computer readable memory produce manufactured products including an instruction apparatus. The instruction apparatus implements the functions specified in one or more flows of the flow charts and/or one or more blocks of the block diagrams.

The computer program instructions can also be loaded onto the computer or other programmable data processing devices so that a series of operation steps are performed on the computer or other programmable devices to produce processing implemented by the computer, and the instructions executed on the computer or other programmable devices provide steps for implementing the functions specified in one or more flows of the flow charts and/or one or more blocks of the block diagrams.

The scope of the invention is defined by the appended claims.

## Claims

1. A method for calibrating downlink channels of smart antennas, comprising:
allocating (S10) a downlink time-domain calibration sequence for each corresponding to-be-calibrated downlink channel according to a downlink calibration instruction;
simultaneously acquiring (S20) a plurality of downlink time-domain calibration sequences corresponding to to-be-calibrated downlink channels in a period of each subsequent downlink GAP, and transmitting each of the acquired downlink time-domain calibration sequences to the corresponding downlink channel until all the allocated downlink time-domain calibration sequences are transmitted;
collecting (S30) the downlink time-domain calibration sequence passing through each downlink channel in real time for each downlink GAP, performing coupling processing on the collected downlink time-domain calibration sequences to generate downlink comprehensive time-domain calibration sequences, transmitting the downlink comprehensive time-domain calibration sequences to downlink calibration channels, converting the downlink comprehensive time-domain calibration sequences passing through the downlink calibration channels into downlink comprehensive frequency-domain calibration sequences, and caching the downlink comprehensive frequency-domain calibration sequences; and
calculating (S40) compensation values of the to-be-calibrated downlink channels according to all the cached downlink comprehensive frequency-domain calibration sequences, and performing online calibration on each of the to-be-calibrated downlink channels according to the compensation values;
**characterized in that**,
after the allocating the corresponding downlink time-domain calibration sequence for the each to-be-calibrated downlink channel according to the downlink calibration instruction, the method further comprises:
dividing the to-be-calibrated downlink channels into multiple groups according to a preset strategy, wherein each group comprises a plurality of downlink channels, the plurality of downlink time-domain calibration sequences acquired in a period of each subsequent downlink GAP are downlink time-domain calibration sequences corresponding to one group of downlink channels in the multiple groups of downlink channels, and the downlink time-domain calibration sequences corresponding to the one group of downlink channels are transmitted in the each downlink GAP .

2. The method for calibrating downlink channels of smart antennas according to claim 1, wherein a step of dividing the to-be-calibrated downlink channels into multiple groups according to the preset strategy wherein each group comprises a plurality of downlink channels, comprises:
dividing N to-be-calibrated downlink channels into N/M groups according to the preset strategy, wherein each group comprises M downlink channels.

3. The method for calibrating downlink channels of smart antennas according to claim 1, wherein a step of dividing the to-be-calibrated downlink channels into multiple groups according to the preset strategy wherein each group comprises a plurality of downlink channels, comprises:
dividing N to-be-calibrated downlink channels into N/M+1 groups according to the preset strategy, wherein each group comprises M downlink channels and a downlink reference channel.

4. The method for calibrating downlink channels of smart antennas according to any one of claims 1-3, wherein each of the downlink time-domain calibration sequences transmitted in a same downlink GAP carries a downlink channel identifier different from other downlink time-domain calibration sequences transmitted in the same downlink GAP.

5. A system for calibrating downlink channels of smart antennas, comprising:
a downlink calibration sequence allocating module (110), configured to allocate a downlink time-domain calibration sequence for each corresponding to-be-calibrated downlink channel according to a downlink calibration instruction;
a downlink calibration sequence transmitting module (120), configured to simultaneously acquire a plurality of downlink time-domain calibration sequences corresponding to to-be-calibrated downlink channels in a period of each subsequent downlink GAP, and transmit each of the acquired downlink time-domain calibration sequences to the corresponding downlink channel until all the allocated downlink time-domain calibration sequences are transmitted;
a downlink calibration sequence processing module (130), configured to collect the downlink time-domain calibration sequence passing through each downlink channel in real time for each downlink GAP, perform coupling processing on the collected downlink time-domain calibration sequences to generate downlink comprehensive time-domain calibration sequences, transmit the downlink comprehensive time-domain calibration sequences to downlink calibration channels, convert the downlink comprehensive time-domain calibration sequences passing through the downlink calibration channels into downlink comprehensive frequency-domain calibration sequences, and cache the downlink comprehensive frequency-domain calibration sequences;
a downlink channel calibrating module (140), configured to calculate compensation values of the to-be-calibrated downlink channels according to all the cached downlink comprehensive frequency-domain calibration sequences, and perform online calibration on each of the to-be-calibrated downlink channels according to the compensation values;
**characterized in that**,
a downlink channel grouping module (150), configured to divide the to-be-calibrated downlink channels into multiple groups according to a preset strategy, wherein each group comprises a plurality of downlink channels; and
the plurality of downlink time-domain calibration sequences acquired in a period of each subsequent downlink GAP are downlink time-domain calibration sequences corresponding to one group of downlink channels in the multiple groups of downlink channels, and the downlink time-domain calibration sequences corresponding to the one group of downlink channels are transmitted in the each downlink GAP.

6. The system for calibrating downlink channels of smart antennas according to claim 5, wherein
the downlink channel grouping module (150) is configured to divide N to-be-calibrated downlink channels into N/M groups according to the preset strategy, wherein each group comprises M downlink channels.

7. The system for calibrating downlink channels of smart antennas according to claim 5, wherein
the downlink channel grouping module (150) is further configured to divide the N to-be-calibrated downlink channels into N/M+1 groups according to the preset strategy, wherein each group comprises M downlink channels and a downlink reference channel.

8. The system for calibrating downlink channels of smart antennas according to any one of claims 5-7, wherein each of the downlink time-domain calibration sequences transmitted in a same downlink GAP carries a downlink channel identifier different from other downlink time-domain calibration sequences transmitted in the same downlink GAP.

9. A method for calibrating uplink channels of smart antennas, comprising:
transmitting (S101) uplink time-domain calibration sequences to uplink calibration channels in a period of a subsequent GAP according to uplink calibration instructions;
**characterized in that**,
acquiring (S102) the uplink time-domain calibration sequences passing through the uplink calibration channels in the period of the GAP, performing one-to-multiple coupling processing on the uplink time-domain calibration sequences according to the number K of the to-be-calibrated uplink channels to generate K uplink time-domain calibration sequences, and transmitting one uplink time-domain calibration sequence to the K to-be-calibrated uplink channels respectively; converting (S103) the uplink time-domain calibration sequence passing through each of the uplink channels into a corresponding uplink frequency-domain calibration sequence; and
calculating (S104) compensation values of the corresponding uplink channels according to the uplink frequency-domain calibration sequence of each of the uplink channels, and performing online calibration on each of the uplink channels according to the compensation values.

10. A system for calibrating uplink channels of smart antennas, comprising:
an uplink calibration sequence transmitting module (210), configured to transmit uplink time-domain calibration sequences to uplink calibration channels in a period of a subsequent GAP according to uplink calibration instructions;
**characterized in that**,
an uplink calibration sequence processing module (220), configured to acquire the uplink time-domain calibration sequences passing through the uplink calibration channels in the period of the GAP, perform one-to-multiple coupling processing on the uplink time-domain calibration sequences according to the number K of the to-be-calibrated uplink channels to generate K uplink time-domain calibration sequences, and transmit one uplink time-domain calibration sequence to the K to-be-calibrated uplink channels respectively;
an uplink calibration sequence converting module (230), configured to convert the uplink time-domain calibration sequence passing through each of the uplink channels into a corresponding uplink frequency-domain calibration sequence; and
an uplink channel calibrating module (240), configured to calculate compensation values of the corresponding uplink channels according to the uplink frequency-domain calibration sequence of each of the uplink channels, and perform online calibration on each of the uplink channels according to the compensation values.

11. A storage medium storing a set of instructions that, when executed by at least one processor, cause the processor to perform operations in claims 1-4.

12. A storage medium storing a set of instructions that, when executed by at least one processor, cause the processor to perform operations in claim 9.

## Patentansprüche

1. Verfahren zur Kalibrierung von Downlink-Kanälen von intelligenten Antennen, umfassend:
Zuweisen (S10) einer Downlink-Zeitdomänen-Kalibriersequenz für jeden entsprechenden zu kalibrierenden Downlink-Kanal gemäß einer Downlink-Kalibrieranweisung;
simultanes Erfassen (S20) einer Mehrzahl von Downlink-Zeitdomänen-Kalibriersequenzen, die zu kalibrierenden Downlink-Kanälen entsprechen, in einer Periode jedes folgenden Downlink-GAPs und Senden jeder der erfassten Downlink-Zeitdomänen-Kalibriersequenzen an den entsprechenden Downlink-Kanal, bis alle der zugewiesenen Downlink-Zeitdomänen-Kalibriersequenzen gesendet sind;
Sammeln (S30) der Downlink-Zeitdomänen-Kalibriersequenz, die durch jeden Downlink-Kanal durchtritt, für jedes Downlink-GAP in Echtzeit, Durchführen von Kopplungsverarbeitung an den gesammelten Downlink-Zeitdomänen-Kalibriersequenzen, um umfassende Downlink-Zeitdomänen-Kalibriersequenzen zu erzeugen, Senden der umfassenden Downlink-Zeitdomänen-Kalibriersequenzen an Downlink-Kalibrierkanäle, Umwandeln der umfassenden Downlink-Zeitdomänen-Kalibriersequenzen, die durch die Downlink-Kalibrierkanäle durchtreten, in umfassende Downlink-Frequenzdomänen-Kalibriersequenzen und Zwischenspeichern der umfassenden Downlink-Frequenzdomänen-Kalibriersequenzen; und
Berechnen (S40) von Kompensationswerten der zu kalibrierenden Downlink-Kanäle gemäß allen der zwischengespeicherten umfassenden Downlink-Frequenzdomänen-Kalibriersequenzen und Durchführen von Online-Kalibrierung an jedem der zu kalibrierenden Downlink-Kanäle gemäß den Kompensationswerten;
**dadurch gekennzeichnet, dass**
das Verfahren nach dem Zuweisen der entsprechenden Downlink-Zeitdomänen-Kalibriersequenz für jeden solchen entsprechenden zu kalibrierenden Downlink-Kanal gemäß der Downlink-Kalibrieranweisung ferner umfasst:
Teilen der zu kalibrierenden Downlink-Kanäle in mehrere Gruppen gemäß einer vorab festgelegten Strategie, wobei jede Gruppe eine Mehrzahl von Downlink-Kanälen umfasst, die Mehrzahl von Downlink-Zeitdomänen-Kalibriersequenzen, die in einer Periode jedes folgenden Downlink-GAPs erfasst werden, Downlink-Zeitdomänen-Kalibriersequenzen sind, die einer Gruppe von Downlink-Kanälen in den mehreren Gruppen von Downlink-Kanälen entsprechen, und die Downlink-Zeitdomänen-Kalibriersequenzen, die der einen Gruppe von Downlink-Kanälen entsprechen, in jedem solchen Downlink-GAP gesendet werden.

2. Verfahren zur Kalibrierung von Downlink-Kanälen von intelligenten Antennen nach Anspruch 1, wobei ein Schritt des Teilens der zu kalibrierenden Downlink-Kanäle in mehrere Gruppen gemäß der vorab festgelegten Strategie, wobei jede Gruppe eine Mehrzahl von Downlink-Kanälen aufweist, umfasst:
Teilen von N zu kalibrierenden Downlink-Kanälen in N/M Gruppen gemäß der vorab festgelegten Strategie, wobei jede Gruppe M Downlink-Kanäle umfasst.

3. Verfahren zur Kalibrierung von Downlink-Kanälen von intelligenten Antennen nach Anspruch 1, wobei ein Schritt des Teilens der zu kalibrierenden Downlink-Kanäle in mehrere Gruppen gemäß der vorab festgelegten Strategie, wobei jede Gruppe eine Mehrzahl von Downlink-Kanälen aufweist, umfasst:
Teilen von N zu kalibrierenden Downlink-Kanälen in N/M + 1 Gruppen gemäß der vorab festgelegten Strategie, wobei jede Gruppe M Downlink-Kanäle und einen Downlink-Referenzkanal umfasst.

4. Verfahren zur Kalibrierung von Downlink-Kanälen von intelligenten Antennen nach einem der Ansprüche 1 bis 3, wobei jede der Downlink-Zeitdomänen-Kalibriersequenzen, die in einem gleichen Downlink-GAP gesendet wird, eine Downlink-Kanalkennung überträgt, die von anderen Downlink-Zeitdomänen-Kalibriersequenzen, die im gleichen Downlink-GAP gesendet werden, verschieden ist.

5. System zum Kalibrieren von Downlink-Kanälen von intelligenten Antennen, umfassend:
ein Modul (110) zum Zuweisen von Downlink-Zeitdomänen-Kalibriersequenzen, das zum Zuweisen einer Downlink-Zeitdomänen-Kalibriersequenz für jeden entsprechenden zu kalibrierenden Downlink-Kanal gemäß einer Downlink-Kalibrieranweisung konfiguriert ist;
ein Downlink-Kalibriersequenz-Sendemodul (120), das so konfiguriert ist, dass es simultan eine Mehrzahl von Downlink-Zeitdomänen-Kalibriersequenzen, die zu kalibrierenden Downlink-Kanälen entsprechen, in einer Periode jedes folgenden Downlink-GAPs erfasst und jede der erfassten Downlink-Zeitdomänen-Kalibriersequenzen an den entsprechenden Downlink-Kanal sendet, bis alle der zugewiesenen Downlink-Zeitdomänen-Kalibriersequenzen gesendet sind;
ein Downlink-Kalibriersequenz-Verarbeitungsmodul (130), das so konfiguriert ist, dass es die Downlink-Zeitdomänen-Kalibriersequenz, die durch jeden Downlink-Kanal durchtritt, für jedes Downlink-GAP in Echtzeit sammelt, Kopplungsverarbeitung an den gesammelten Downlink-Zeitdomänen-Kalibriersequenzen durchführt, um umfassende Downlink-Zeitdomänen-Kalibriersequenzen zu erzeugen, die umfassenden Downlink-Zeitdomänen-Kalibriersequenzen an Downlink-Kalibrierkanäle sendet, die umfassenden Downlink-Zeitdomänen-Kalibriersequenzen, die durch die Downlink-Kalibrierkanäle durchtreten, in umfassende Downlink-Frequenzdomänen-Kalibriersequenzen umwandelt und die umfassenden Downlink-Frequenzdomänen-Kalibriersequenzen zwischenspeichert; und
ein Downlink-Kanalkalibriermodul (140), das so konfiguriert ist, dass es Kompensationswerte der zu kalibrierenden Downlink-Kanäle gemäß allen der zwischengespeicherten umfassenden Downlink-Frequenzdomänen-Kalibriersequenzen berechnet und Online-Kalibrierung an jedem der zu kalibrierenden Downlink-Kanäle gemäß den Kompensationswerten durchführt;
**dadurch gekennzeichnet, dass**
ein Downlink-Kanalgruppierungsmodul (150) zum Teilen der zu kalibrierenden Downlink-Kanäle in mehrere Gruppen gemäß einer vorab festgelegten Strategie konfiguriert ist, wobei jede Gruppe eine Mehrzahl von Downlink-Kanälen umfasst; und
die Mehrzahl von Downlink-Zeitdomänen-Kalibriersequenzen, die in einer Periode jedes folgenden Downlink-GAPs erfasst werden, Downlink-Zeitdomänen-Kalibriersequenzen sind, die einer Gruppe von Downlink-Kanälen in den mehreren Gruppen von Downlink-Kanälen entsprechen, und die Downlink-Zeitdomänen-Kalibriersequenzen, die der einen Gruppe von Downlink-Kanälen entsprechen, in jedem solchen Downlink-GAP gesendet werden.

6. System zum Kalibrieren von Downlink-Kanälen von intelligenten Antennen nach Anspruch 5, wobei
das Downlink-Kanalgruppierungsmodul (150) zum Teilen von N zu kalibrierenden Downlink-Kanälen in N/M Gruppen gemäß der vorab festgelegten Strategie konfiguriert ist, wobei jede Gruppe M Downlink-Kanälen umfasst.

7. System zum Kalibrieren von Downlink-Kanälen von intelligenten Antennen nach Anspruch 5, wobei
das Downlink-Kanalgruppierungsmodul (150) zum Teilen der N zu kalibrierenden Downlink-Kanälen in N/M + 1 Gruppen gemäß der vorab festgelegten Strategie konfiguriert ist, wobei jede Gruppe M Downlink-Kanäle und einen Downlink-Referenzkanal umfasst.

8. System zum Kalibrieren von Downlink-Kanälen von intelligenten Antennen nach einem der Ansprüche 5 bis 7, wobei jede der Downlink-Zeitdomänen-Kalibriersequenzen, die in einem gleichen Downlink-GAP gesendet wird, eine Downlink-Kanalkennung überträgt, die von anderen Downlink-Zeitdomänen-Kalibriersequenzen, die im gleichen Downlink-GAP gesendet werden, verschieden ist.

9. Verfahren zur Kalibrierung von Uplink-Kanälen von intelligenten Antennen, umfassend:
Senden (S101) von Uplink-Zeitdomänen-Kalibriersequenzen an Uplink-Kalibrierkanäle in einer Periode eines folgenden GAPs gemäß Uplink-Kalibriersequenzen;
**gekennzeichnet durch**
Erfassen (S102) der Uplink-Zeitdomänen-Kalibriersequenzen, die durch die Uplink-Kalibrierkanäle durchtreten, in der Periode des GAPs, Durchführen von Eins-zu-x-Kopplungsverarbeitung an den Uplink-Zeitdomänen-Kalibriersequenzen gemäß der Anzahl K der zu kalibrierenden Uplink-Kanäle, um K Uplink-Zeitdomänen-Kalibriersequenzen zu erzeugen, und Senden jeweils einer Uplink-Zeitdomänen-Kalibriersequenz an die K zu kalibrierenden Uplink-Kanäle; Umwandeln (S103) der Uplink-Zeitdomänen-Kalibriersequenz, die durch jeden der Uplink-Kanäle durchtritt, in eine entsprechende Uplink-Frequenzdomänen-Kalibriersequenz; und
Berechnen (S104) von Kompensationswerten der entsprechenden Uplink-Kanäle gemäß der Uplink-Frequenzdomänen-Kalibriersequenz eines jeden der Uplink-Kanäle und Durchführen von Online-Kalibrierung an jedem der Uplink-Kanäle gemäß den Kompensationswerten.

10. System zur Kalibrieren von Uplink-Kanälen von intelligenten Antennen, umfassend:
ein Uplink-Kalibriersequenz-Sendemodul (210), das zum Senden von Uplink-Zeitdomänen-Kalibriersequenzen an Uplink-Kalibrierkanäle in einer Periode eines folgenden GAPs gemäß Uplink-Kalibrieranweisungen konfiguriert ist;
**gekennzeichnet durch**
ein Uplink-Kalibriersequenz-Verarbeitungsmodul (220), das so konfiguriert ist, dass es die Uplink-Zeitdomänen-Kalibriersequenzen, die durch die Uplink-Kalibrierkanäle durchtreten, in der Periode des GAPs erfasst, Eins-zu-x-Kopplungsverarbeitung an den Uplink-Zeitdomänen-Kalibriersequenzen gemäß der Anzahl K der zu kalibrierenden Uplink-Kanäle durchführt, um K Uplink-Zeitdomänen-Kalibriersequenzen zu erzeugen, und jeweils eine Uplink-Zeitdomänen-Kalibriersequenz an die K zu kalibrierenden Uplink-Kanäle sendet;
ein Uplink-Kalibriersequenz-Umwandlungsmodul (230), das so konfiguriert ist, dass es die Uplink-Zeitdomänen-Kalibriersequenz, die durch jeden der Uplink-Kanäle durchtritt, in eine entsprechende Uplink-Frequenzdomänen-Kalibriersequenz umwandelt; und
ein Uplink-Kanalkalibriermodul (240), das so konfiguriert ist, dass es Kompensationswerte der entsprechenden Uplink-Kanäle gemäß der Uplink-Frequenzdomänen-Kalibriersequenz eines jeden der Uplink-Kanäle berechnet und Online-Kalibrierung an jedem der Uplink-Kanäle gemäß den Kompensationswerten durchführt.

11. Speichermedium, das einen Satz von Anweisungen speichert, die bei Ausführung durch mindestens einen Prozessor den Prozessor zum Durchführen von Operationen in Anspruch 1 bis 4 veranlassen.

12. Speichermedium, das einen Satz von Anweisungen speichert, die bei Ausführung durch mindestens einen Prozessor den Prozessor zum Durchführen von Operationen in Anspruch 9 veranlassen.

## Revendications

1. Procédé pour étalonner les canaux de liaison descendante d'antennes intelligentes, comprenant :
l'attribution (S10) d'une séquence d'étalonnage de domaine temporel de liaison descendante pour chaque canal de liaison descendante à étalonner correspondant conformément à une instruction d'étalonnage de liaison descendante ;
l'acquisition simultanément (S20) d'une pluralité de séquences d'étalonnage de domaine temporel de liaison descendante correspondant aux canaux de liaison descendante à étalonner dans une période de chaque GAP de liaison descendante subséquent, et la transmission de chacune des séquences d'étalonnage de domaine temporel de liaison descendante acquises au canal de liaison descendante correspondant jusqu'à ce que toutes les séquences d'étalonnage de domaine temporel de liaison descendante attribuées soient transmises ;
la collecte (S30) de la séquence d'étalonnage de domaine temporel de liaison descendante passant par chaque canal de liaison descendante en temps réel pour chaque GAP de liaison descendante, l'exécution d'un traitement de couplage sur les séquences d'étalonnage de domaine temporel de liaison descendante collectées pour générer des séquences d'étalonnage de domaine temporel complètes de liaison descendante, la transmission des séquences d'étalonnage de domaine temporel complètes de liaison descendante aux canaux d'étalonnage de liaison descendante, la conversion des séquences d'étalonnage de domaine temporel complètes de liaison descendante passant par les canaux d'étalonnage de liaison descendante en des séquences d'étalonnage de domaine fréquentiel complètes de liaison descendante, et la mise en mémoire cache des séquences d'étalonnage de domaine fréquentiel complètes de liaison descendante ; et
le calcul (S40) de valeurs de compensation des canaux de liaison descendante à étalonner conformément à toutes les séquences d'étalonnage de domaine fréquentiel complètes de liaison descendante en mémoire cache, et l'exécution d'un étalonnage en ligne sur chacun des canaux de liaison descendante à étalonner conformément aux valeurs de compensation ;
**caractérisé en ce que**,
après l'attribution de la séquence d'étalonnage de domaine temporel de liaison descendante correspondante pour chaque dit canal de liaison descendante à étalonner conformément à l'instruction d'étalonnage de liaison descendante, le procédé comprend en outre :
la division des canaux de liaison descendante à étalonner en de multiples groupes conformément à une stratégie prédéterminée, dans lequel chaque groupe comprend une pluralité de canaux de liaison descendante, la pluralité de séquences d'étalonnage de domaine temporel de liaison descendante acquises dans une période de chaque GAP de liaison descendante subséquent sont des séquences d'étalonnage de domaine temporel de liaison descendante correspondant à un groupe de canaux de liaison descendante dans les multiples groupes de canaux de liaison descendante, et les séquences d'étalonnage de domaine temporel de liaison descendante correspondant audit un groupe de canaux de liaison descendante sont transmises dans chaque dit GAP de liaison descendante.

2. Procédé pour étalonner les canaux de liaison descendante d'antennes intelligentes selon la revendication 1, dans lequel une étape de division des canaux de liaison descendante à étalonner en de multiples groupes conformément à la stratégie prédéterminée, dans lequel chaque groupe comprend une pluralité de canaux de liaison descendante, comprend :
la division de N canaux de liaison descendante à étalonner en N/M groupes conformément à la stratégie prédéterminée, dans lequel chaque groupe comprend M canaux de liaison descendante.

3. Procédé pour étalonner les canaux de liaison descendante d'antennes intelligentes selon la revendication 1, dans lequel une étape de division des canaux de liaison descendante à étalonner en de multiples groupes conformément à la stratégie prédéterminée, dans lequel chaque groupe comprend une pluralité de canaux de liaison descendante, comprend :
la division de N canaux de liaison descendante à étalonner en N/M+1 groupes conformément à la stratégie prédéterminée, dans lequel chaque groupe comprend M canaux de liaison descendante et un canal de référence de liaison descendante.

4. Procédé pour étalonner les canaux de liaison descendante d'antennes intelligentes selon l'une quelconque des revendications 1 à 3, dans lequel chacune des séquences d'étalonnage de domaine temporel de liaison descendante transmises dans un même GAP de liaison descendante transporte un identifiant de canal de liaison descendante différent des autres séquences d'étalonnage de domaine temporel de liaison descendante transmises dans le même GAP de liaison descendante.

5. Système pour étalonner les canaux de liaison descendante d'antennes intelligentes, comprenant :
un module d'attribution de séquence d'étalonnage de liaison descendante (110), configuré pour attribuer une séquence d'étalonnage de domaine temporel de liaison descendante pour chaque canal de liaison descendante à étalonner correspondant conformément à une instruction d'étalonnage de liaison descendante ;
un module de transmission de séquence d'étalonnage de liaison descendante (120), configuré pour acquérir simultanément une pluralité de séquences d'étalonnage de domaine temporel de liaison descendante correspondant aux canaux de liaison descendante à étalonner dans une période de chaque GAP de liaison descendante subséquent, et pour transmettre chacune des séquences d'étalonnage de domaine temporel de liaison descendante acquises au canal de liaison descendante correspondant jusqu'à ce que toutes les séquences d'étalonnage de domaine temporel de liaison descendante attribuées soient transmises ;
un module de traitement de séquence d'étalonnage de liaison descendante (130), configuré pour collecter la séquence d'étalonnage de domaine temporel de liaison descendante passant par chaque canal de liaison descendante en temps réel pour chaque GAP de liaison descendante, effectuer un traitement de couplage sur les séquences d'étalonnage de domaine temporel de liaison descendante collectées pour générer des séquences d'étalonnage de domaine temporel complètes de liaison descendante, transmettre les séquences d'étalonnage de domaine temporel complètes de liaison descendante aux canaux d'étalonnage de liaison descendante, convertir les séquences d'étalonnage de domaine temporel complètes de liaison descendante passant par les canaux d'étalonnage de liaison descendante en des séquences d'étalonnage de domaine fréquentiel complètes de liaison descendante, et mettre en mémoire cache les séquences d'étalonnage de domaine fréquentiel complètes de liaison descendante ;
un module d'étalonnage de canal de liaison descendante (140), configuré pour calculer des valeurs de compensation des canaux de liaison descendante à étalonner conformément à toutes les séquences d'étalonnage de domaine fréquentiel complètes de liaison descendante en mémoire cache, et effectuer un étalonnage en ligne sur chacun des canaux de liaison descendante à étalonner conformément aux valeurs de compensation ;
**caractérisé en ce que**
un module de groupement de canaux de liaison descendante (150) est configuré pour diviser les canaux de liaison descendante à étalonner en de multiples groupes conformément à une stratégie prédéterminée, dans lequel chaque groupe comprend une pluralité de canaux de liaison descendante ; et
la pluralité de séquences d'étalonnage de domaine temporel de liaison descendante acquises dans une période de chaque GAP de liaison descendante subséquent sont des séquences d'étalonnage de domaine temporel de liaison descendante correspondant à un groupe de canaux de liaison descendante dans les multiples groupes de canaux de liaison descendante, et les séquences d'étalonnage de domaine temporel de liaison descendante correspondant audit un groupe de canaux de liaison descendante sont transmises dans chaque dit GAP de liaison descendante.

6. Système pour étalonner les canaux de liaison descendante d'antennes intelligentes selon la revendication 5, dans lequel
le module de groupement de canaux de liaison descendante (150) est configuré pour diviser N canaux de liaison descendante à étalonner en N/M groupes conformément à la stratégie prédéterminée, dans lequel chaque groupe comprend M canaux de liaison descendante.

7. Système pour étalonner les canaux de liaison descendante d'antennes intelligentes selon la revendication 5, dans lequel
le module de groupement de canaux de liaison descendante (150) est en outre configuré pour diviser les N canaux de liaison descendante à étalonner en N/M+1 groupes conformément à la stratégie prédéterminée, dans lequel chaque groupe comprend M canaux de liaison descendante et un canal de référence de liaison descendante.

8. Système pour étalonner les canaux de liaison descendante d'antennes intelligentes selon l'une quelconque des revendications 5 à 7, dans lequel chacune des séquences d'étalonnage de domaine temporel de liaison descendante transmises dans un même GAP de liaison descendante transporte un identifiant de canal de liaison descendante différent des autres séquences d'étalonnage de domaine temporel de liaison descendante transmises dans le même GAP de liaison descendante.

9. Procédé pour étalonner les canaux de liaison montante d'antennes intelligentes, comprenant :
la transmission (S101) de séquences d'étalonnage de domaine temporel de liaison montante aux canaux d'étalonnage de liaison montante dans une période d'un GAP subséquent conformément à des instructions d'étalonnage de liaison montante ;
**caractérisé par**
l'acquisition (S102) des séquences d'étalonnage de domaine temporel de liaison montante passant par les canaux d'étalonnage de liaison montante dans la période du GAP, l'exécution d'un traitement de couplage un vers multiple sur les séquences d'étalonnage de domaine temporel de liaison montante conformément au nombre K des canaux de liaison montante à étalonner pour générer K séquences d'étalonnage de domaine temporel de liaison montante, et la transmission d'une séquence d'étalonnage de domaine temporel de liaison montante aux K canaux de liaison montante à étalonner, respectivement ; la conversion (S103) de la séquence d'étalonnage de domaine temporel de liaison montante passant par chacun des canaux de liaison montante en une séquence d'étalonnage de domaine fréquentiel de liaison montante correspondante ; et
le calcul (S104) de valeurs de compensation des canaux de liaison montante correspondants conformément à la séquence d'étalonnage de domaine fréquentiel de liaison montante de chacun des canaux de liaison montante, et l'exécution d'un étalonnage en ligne sur chacun des canaux de liaison montante conformément aux valeurs de compensation.

10. Système pour étalonner les canaux de liaison montante d'antennes intelligentes, comprenant :
un module de transmission de séquence d'étalonnage de liaison montante (210), configuré pour transmettre des séquences d'étalonnage de domaine temporel de liaison montante aux canaux d'étalonnage de liaison montante dans une période d'un GAP subséquent conformément à des instructions d'étalonnage de liaison montante ;
**caractérisé par**
un module de traitement de séquence d'étalonnage de liaison montante (220), configuré pour acquérir les séquences d'étalonnage de domaine temporel de liaison montante passant par les canaux d'étalonnage de liaison montante dans la période du GAP, effectuer un traitement de couplage un vers multiple sur les séquences d'étalonnage de domaine temporel de liaison montante conformément au nombre K des canaux de liaison montante à étalonner pour générer K séquences d'étalonnage de domaine temporel de liaison montante, et transmettre une séquence d'étalonnage de domaine temporel de liaison montante aux K canaux de liaison montante à étalonner, respectivement ;
un module de conversion de séquence d'étalonnage de liaison montante (230), configuré pour convertir la séquence d'étalonnage de domaine temporel de liaison montante passant par chacun des canaux de liaison montante en une séquence d'étalonnage de domaine fréquentiel de liaison montante correspondante ; et
un module d'étalonnage de canal de liaison montante (240), configuré pour calculer des valeurs de compensation des canaux de liaison montante correspondants conformément à la séquence d'étalonnage de domaine fréquentiel de liaison montante de chacun des canaux de liaison montante, et effectuer un étalonnage en ligne sur chacun des canaux de liaison montante conformément aux valeurs de compensation.

11. Support de mémorisation mémorisant un jeu d'instructions qui, lorsqu'elles sont exécutées par au moins un processeur, amènent le processeur à effectuer les opérations des revendications 1 à 4.

12. Support de mémorisation mémorisant un jeu d'instructions qui, lorsqu'elles sont exécutées par au moins un processeur, amènent le processeur à effectuer les opérations de la revendication 9.
